# EUROPEAN PATENT APPLICATION

(11) **EP 4 559 777 A1**
(43) Date of publication of application: **28.05.2025**
(21) Application number: 24163062.3
(22) Date of filing: 12.03.2024
(51) Int. Cl.: B62B 3/00, B62B 3/02

(54) **COLLAPSIBLE WAGON**

(30) Priority: 23.11.2023 CN 202311573746; 23.11.2023 CN 202323173129 U
(71) Applicant: Goleader Industries (Zhejiang) Co., Ltd., Jinhua City, Zhejiang Province (CN)
(72) Inventor: CHEN, Xiaobo, Jinhua City, 321000 (CN); GAO, Haihong, Jinhua City, 321000 (CN); CHEN, Xin, Jinhua City, 321000 (CN); CHEN, Fengwang, Jinhua City, 321000 (CN); WANG, Guangchao, Jinhua City, 321000 (CN)
(74) Representative: Lippert Stachow Patentanwälte Rechtsanwälte

(57) **Abstract**

The present disclosure provides a collapsible wagon comprising: a support assembly comprising a first support and a second support that are spaced apart in a first direction; and a chassis assembly arranged between the first support and the second support and comprising a first chassis hinged to the first support and a second chassis hinged to the second support. The first chassis is configured to comprise a first parallel-bars structure vertically arranged, and the second chassis is configured to comprise a second parallel-bars structure vertically arranged. The first parallel-bars structure and the second parallel-bars structure are hinged to a groove connector, and are configured to respectively drive the first chassis and the second chassis to move synchronously in response to movement of the groove connector in a vertical direction. The present disclosure adopts a chassis assembly having parallel-bars structures, which improves support strength. Moreover, the chassis assembly is wholly collapsed or expanded by means of a groove connector, which greatly simplifies the collapsing or expanding operation. The collapsible wagon of the present disclosure has no side support, and the packaging volume thereof is greatly reduced after being collapsed, such that it is convenient for transportation, use, and storage.

## Description

### RELATED FIELD

The present disclosure relates to the technical field of outdoor products, and in particular to a collapsible wagon.

### BACKGROUND

As living standards get increasingly higher, people's demands for leisure and entertainment are becoming more and more diversified. Collapsible wagons are widely popular due to their portability for outdoor use. The collapsible wagon refers to a wagon that is collapsible to reduce its volume. The collapsible wagon in a collapsed state can be easily carried, stored or transported, and the collapsible wagon in an expanded state can carry articles for the user and move to meet the needs of handling goods or shopping.

Most of the existing collapsible wagons have side supports and complicated structures, and are inconvenient to be operated when they are collapsed or expanded. Moreover, the large amount of parts and the large overall volume after being collapsed are not conducive for the collapsible wagons to be carried and stored, and also result in high cost. In addition, for the bottom support that carries articles, since the force applied downward to the bottom support is concentrated in the middle of the bottom support after the bottom support is expanded, it is easy to cause deformation or even fracture of the bars in the middle. As a result, both manufacturers and users have put forward more improvement requirements for collapsible wagon products.

### SUMMARY

It is an object of the present disclosure to provide a collapsible wagon, which has a reduced volume after being collapsed by means of a simplified structure, and has optimized collapsing or expanding means, thereby improving the use comfort for the user.

For this purpose, the present disclosure provides a collapsible wagon comprising: a support assembly comprising a first support and a second support that are spaced apart in a first direction; and a chassis assembly arranged between the first support and the second support and comprising a first chassis and a second chassis, the first chassis being hinged to the first support and the second chassis being hinged to the second support; wherein the first chassis is configured to comprise a first parallel-bars structure vertically arranged, wherein the second chassis is configured to comprise a second parallel-bars structure vertically arranged, and wherein the first parallel-bars structure and the second parallel-bars structure are hinged to a groove connector, and are configured to respectively drive the first chassis and the second chassis to move synchronously in response to movement of the groove connector in a vertical direction.

In accordance with the above technical concept, embodiments of the present disclosure may further comprise any one or more of the following alternative options.

In some alternative options, the first chassis and the second chassis each comprises a plurality of support bars, and wherein at least one pair of parallel support bars extending in the first direction and spaced apart in the vertical direction constitutes the first parallel-bars structure or the second parallel-bars structure.

In some alternative options, the first support comprises a pair of first vertical bars spaced apart in a second direction and a first connecting bar arranged therebetween, wherein the second support comprises a pair of second vertical bars spaced apart in the second direction and a second connecting bar arranged therebetween, the second direction being perpendicular to the first direction; and wherein the first parallel-bars structure comprises a pair of first parallel-bars respectively hinged to the pair of first vertical bars, the second parallel-bars structure comprises a pair of second parallel-bars respectively hinged to the pair of second vertical bars, and opposing ends of each first parallel-bars and the corresponding second parallel-bars are respectively hinged to the groove connector.

In some alternative options, each first parallel-bars comprises a first upper bar and a first lower bar that are spaced apart in the vertical direction, and wherein the second parallel-bars comprises a second upper bar and a second lower bar that are spaced apart in the vertical direction; the first parallel-bars and the second parallel-bars having same or different lengths.

In some alternative options, the first chassis comprises a plurality of first support bars parallel to the first upper bar and/or the first lower bar, and wherein the second chassis comprises a plurality of second support bars parallel to the second upper bar and/or the second lower bar.

In some alternative options, the length of each first vertical bar and the length of each second vertical bar do not exceed that of the first parallel-bars and/or the second parallel-bars.

In some alternative options, the groove connector is configured to comprise a pair of side walls extending in the vertical direction and spaced apart, and a connecting wall connecting the pair of side walls, wherein the first parallel-bars and the second parallel-bars are respectively hinged between the pair of side walls, and wherein the connecting wall serves as a stopper for limiting vertical movement of the first parallel-bars and the second parallel-bars.

In some alternative options, the connecting wall is a top wall of the groove connector, and wherein the side walls are configured to taper in dimension downward from the connecting wall.

In some alternative options, the length of the first upper bar is less than or equal to that of the first lower bar, and wherein the length of the second upper bar is less than or equal to that of the second lower bar.

In some alternative options, the chassis assembly further comprises a connecting shaft arranged between the first chassis and the second chassis, and wherein the connecting shaft is connected to the groove connector to facilitate vertical movement of the groove connector.

The collapsible wagon according to the present disclosure adopts a chassis assembly having parallel-bars structures, which improves support strength, and can avoid deformation or fracture in the middle of the chassis assembly caused by stress concentration. Moreover, the chassis assembly is wholly collapsed or expanded by means of a groove connector, which greatly simplifies the collapsing or expanding operation. In addition, the collapsible wagon according to the present disclosure has no side support, and the packaging volume thereof is greatly reduced after being collapsed, such that it is convenient for transportation, use, and storage, which improves the use comfort for the user.

### BRIEF DESCRIPTION OF THE DRAWINGS

Other features and advantages of the present disclosure can be readily understood from the following embodiments described in detail in conjunction with the accompanying drawings. In the accompanying drawings, the same reference numerals represent the same or similar components.
FIG. 1 is a schematic view of a collapsible wagon according to an embodiment of the present disclosure in an expanded state;
FIG. 2 is a side schematic view of the collapsible wagon in the state shown in FIG. 1;
FIG. 3 is a schematic view of the collapsible wagon of FIG. 1 in a partially collapsed state;
FIG. 4 is a side schematic view of the collapsible wagon in the state shown in FIG. 3;
FIG. 5 is an enlarged schematic view of the portion A in FIG. 1;
FIG. 6 is a cross-sectional schematic view of a groove connector hinged with a first parallel-bars and a second parallel-bars;
FIG. 7 is a schematic view of the collapsible wagon of FIG. 1 in a fully collapsed state; and
FIG. 8 is a side schematic view of the collapsible wagon in the state shown in FIG. 7.

### DETAILED DESCRIPTION

The implementation and use of the embodiments are described in detail below. However, it should be understood that the specific embodiments as described merely exemplify specific ways of implementing and using the present disclosure and are not intended to limit the scope of the present disclosure. In the description, when describing structures and positions of components, the directional expressions, such as "upper", "lower", "top" and "bottom", are not absolute but relative. When the components are arranged as shown in the drawings, these directional expressions are appropriate, but when the positions of these components in the drawings are altered, these expressions should be altered accordingly.

In this specification, the expression "comprise" and the synonymous similar expressions "include", "contain" and "have" are open-ended, and do not exclude additional unlisted elements, steps or components.

In this specification, unless otherwise explicitly specified, terms such as "installation", "connection", and "attach" should be understood in a broad sense. For example, the terms may imply a fixed connection, a detachable connection, or an integral connection; a direct connection, or an indirect connection through an intervening medium; an internal communication or an interaction between two components. For those skilled in the art, the specific meanings of the above terms in this specification can be understood according to specific circumstances.

In this specification, the terms such as "first" and "second" are not used to define the priority and the number of components unless otherwise stated.

It has been realized that most of the existing collapsible wagons have side supports and complicated structures, and are inconvenient to be collapsed or expanded. Moreover, due to the large number of parts, the cost is high, and the overall volume after being collapsed is large, which are not conducive for the collapsible wagons to be carried and stored. In addition, the middle portion of the bottom support of the existing collapsible wagon is prone to deformation and fracture. In accordance with the concept of the present disclosure, a collapsible wagon without a side support is provided, and the collapsing or expanding operation is simplified by means of the structural design of a chassis assembly, so as to facilitate the use for a user. Moreover, the overall volume after being collapsed is reduced, the deformation or fracture of the middle portion of the chassis assembly is avoided, and the structural strength and use reliability of the collapsible wagon are improved.

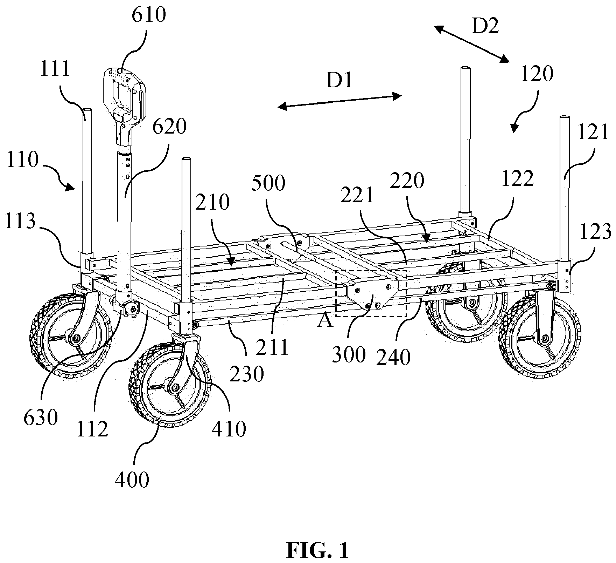

FIG. 1 shows a collapsible wagon in an expanded state according to an embodiment of the present disclosure. In general, the collapsible wagon comprises a support assembly and a chassis assembly. The support assembly comprises a first support 110 and a second support 120 that are spaced apart in a first direction D1. The chassis assembly is arranged between the first support 110 and the second support 120, and comprises a first chassis 210 and a second chassis 220. The first chassis 210 is hinged to the first support 110, and the second chassis 220 is hinged to the second support 120. The first support 110 may be referred to the front support, and the second support 120 may be referred to the rear support, wherein the "front" and "rear" are defined relative to the user's position. For example, when the user uses the collapsible wagon, the front support is close to the user, and the rear support is away from the user.

According to the present disclosure, the first chassis 210 is configured to comprise a first parallel-bars structure vertically arranged, and the second chassis 220 is configured to comprise a second parallel-bars structure vertically arranged, wherein the "vertical" direction refers to a direction substantially perpendicular to the ground. Preferably, the first parallel-bars structure and the second parallel-bars structure are hinged to a groove connector, and are configured to respectively drive the first chassis and the second chassis to move synchronously in response to the movement of the groove connector in the vertical direction. In other words, the chassis assembly can be collapsed upward or expanded downward by means of the groove connector.

According to the embodiment of the present disclosure, the collapsing or expanding operation of the collapsible wagon only involves the movement of the chassis assembly, and the operation is convenient. Since there is no side support, the number of parts of the collapsible wagon is significantly reduced compared with the existing collapsible wagons, such that the weight is low, the cost is greatly reduced, the volume is small in the collapsed state, and the storage operation is easy. Moreover, the chassis assembly in a double-layer form effectively spreads the force applied to the chassis assembly evenly, improves the support strength, and avoids deformation or fracture defects caused by concentration of the force applied to the existing collapsible wagon in the middle of the chassis. In addition, the collapsible wagon also has some additional functions in addition to carrying articles in the expanded state, for example, serves as a stool, due to the lack of side support.

In some embodiments, the first chassis 210 and the second chassis 220 each comprises a plurality of support bars 211 and 221, which can extend in the first direction D1 or at an angle to the first direction. Depending on different needs, the plurality of support bars may extend intersectionally to provide required support strength. Preferably, at least one pair of parallel support bars extending in the first direction D1 and spaced apart in the vertical direction constitutes the first parallel-bars structure or the second parallel-bars structure. It should be understood that one, two or more first or second parallel-bars structures may be provided according to different needs, as long as the first parallel-bars structures and the second parallel-bars structures correspond to each other in pairs, and one, two or more groove connectors may be provided accordingly.

In the illustrated embodiment, the first support 110 comprises a pair of first vertical bars 111 spaced apart in a second direction D2 and a first connecting bar 112 arranged therebetween, the second support 120 comprises a pair of second vertical bars 121 spaced apart in the second direction D2 and a second connecting bar 122 arranged therebetween, and the second direction D2 is perpendicular to the first direction D1. Each first vertical bar 111 may be fixed to the first connecting bar 112 by a first connector 113, and each second vertical bar 121 may be fixed to the second connecting bar 122 by a second connector 123, and thereby both being held in an upright state.

The collapsible wagon further comprises a plurality of wheels 400 attached to the first support 110 and the second support 120. Specifically, the wheels 400 are attached to the first connecting bar 112 and the second connecting bar 122 via wheel frames 410, and may be located substantially below the first vertical bars 111 and the second vertical bars 121. The collapsible wagon may further comprise a handle assembly, which may be attached to the first support 110 or the second support 120. In the illustrated embodiment, the handle assembly is attached to the first support 110 and comprises a handle 610 and a handle vertical bar 620 that attaches the handle 610 to the first connecting bar 112. In some embodiments, the handle vertical bar 620 may be fixedly connected or hinged to the first connecting bar 112 by a handle connector 630, and when hinged, the handle assembly can be pivoted up and down so as to be tilted at an angle relative to the vertical direction for the user to pull. Alternatively, the handle vertical bar 620 is configured to be telescopic such that the length thereof can be adjusted to be adapted to users of different heights.

In some embodiments, the first parallel-bars structure may comprise a pair of first parallel-bars 230 respectively hinged to the pair of first vertical bars 111 via the first connector 113, and the second parallel-bars structure may comprise a pair of second parallel-bars 240 respectively hinged to the pair of second vertical bars 121 via the second connector 123. The opposing ends of each first parallel-bars 230 and the corresponding second parallel-bars 240 are respectively hinged to one groove connector 300. That is, in the illustrated embodiment, the collapsible wagon comprises a pair of groove connectors 300. It should be understood that the pair of first parallel-bars 230 spaced apart in the second direction D2 have substantially the same structures and dimensions, and similarly, the pair of second parallel-bars 240 have substantially the same structures and dimensions. In some embodiments, the first parallel-bars 230 and the corresponding second parallel-bars 240 may have the same or different structures and dimensions, preferably, may be symmetrical with each other relative to the groove connector 300. For conciseness, only one first parallel-bars 230 and the corresponding second parallel-bars 240 are specifically described below.

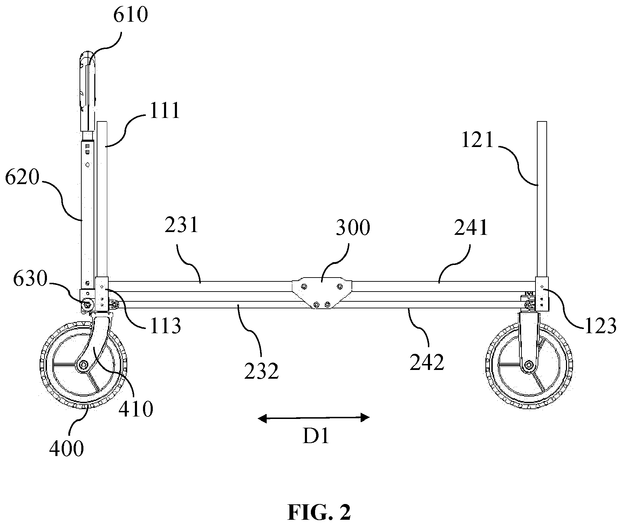

Referring to FIGS. 1 to 4, in some embodiments, the first parallel-bars 230 comprises a first upper bar 231 and a first lower bar 232 that are spaced apart in the vertical direction, and the second parallel-bars 240 comprises a second upper bar 241 and a second lower bar 242 that are spaced apart in the vertical direction. In some embodiments, the first chassis 210 comprises a plurality of first support bars 211 parallel to the first upper bar 231 and/or the first lower bar 232. FIG. 1 schematically shows that the plurality of first support bars 211 are parallel to the first upper bar 231. Similarly, the second chassis 220 comprises a plurality of second support bars 221 parallel to the second upper bar 241 and/or the second lower bar 242. FIG. 1 schematically shows that the plurality of second support bars 221 are parallel to the second upper bar 241.

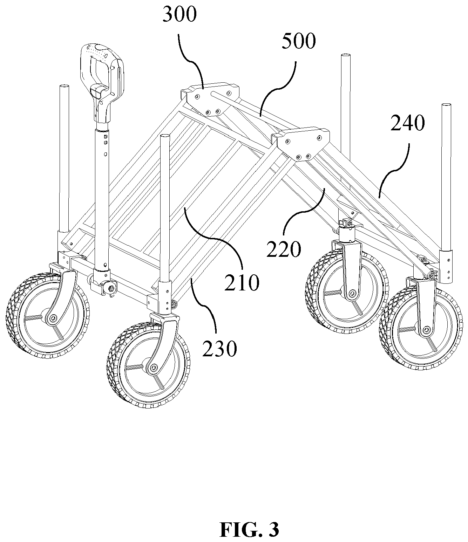

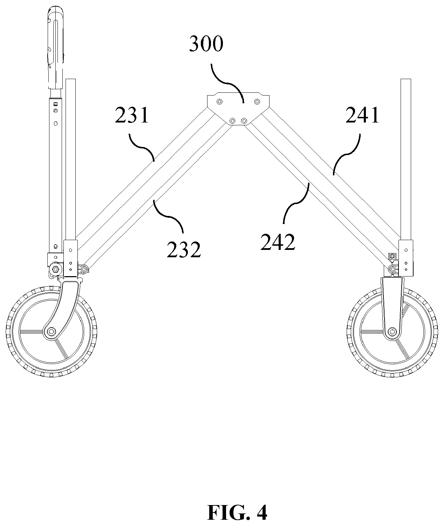

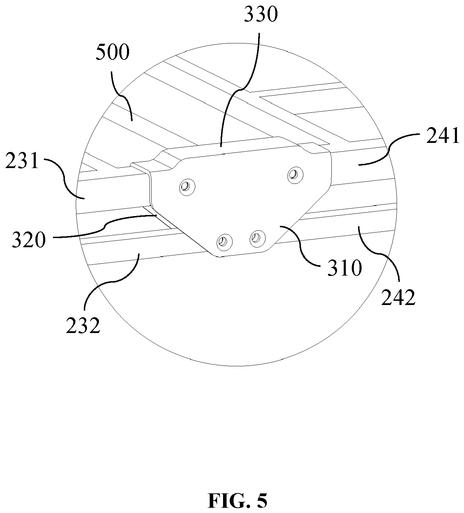

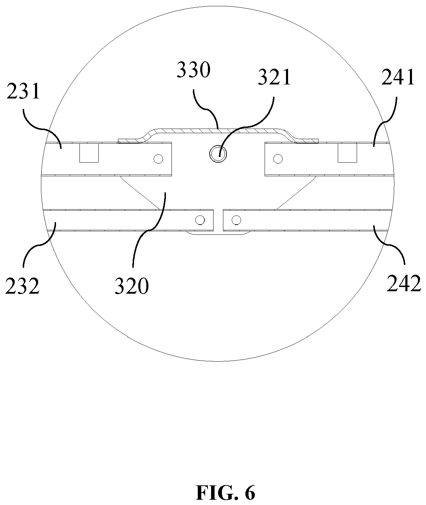

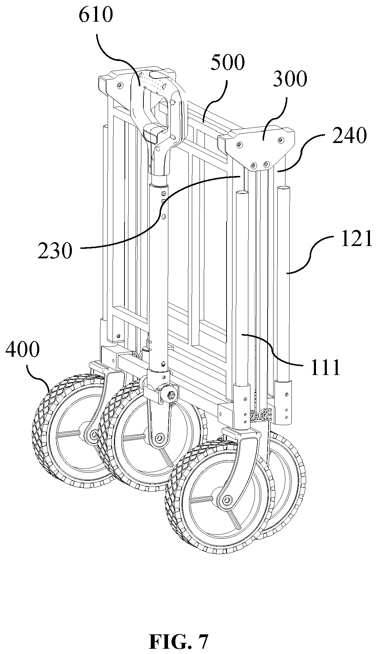

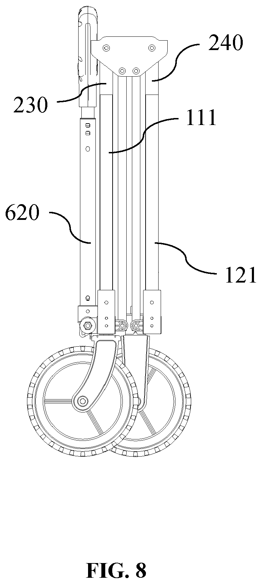

Referring to FIGS. 1, 5 and 6, in some embodiments, the groove connector 300 is configured to comprise a pair of side walls 310 and 320 extending in the vertical direction and spaced apart, and a connecting wall 330 connecting the pair of side walls 310 and 320. The first parallel-bars 230 and the second parallel-bars 240 are respectively hinged between the pair of side walls 310 and 320. Preferably, the connecting wall 330 serves as a stopper for limiting the vertical movement of the first parallel-bars 230 and the second parallel-bars 240. In the illustrated embodiment, the connecting wall 330 serves as a top wall of the groove connector 300, and does not hinder the first parallel-bars 230 and the second parallel-bars 240 from being collapsed into the groove connector when the groove connector 300 moves upward, but can prevent the opposing ends of the first parallel-bars 230 and the second parallel-bars 240 hinged to the groove connector 300 from being collapsed downward when the groove connector 300 moves downward. Specifically, when the collapsible wagon is required to be collapsed from the expanded state shown in FIG. 1, the groove connector 300 is moved upward such that the opposing ends of the first parallel-bars 230 and the second parallel-bars 240 hinged to the groove connector 300 move upward synchronously, while the ends of the first parallel-bars 230 and the second parallel-bars 240 hinged to the first support 110 and the second support 120 gradually approach each other, that is, the chassis assembly is in a partially collapsed state or transitional state as shown in FIGS. 3 and 4. As the groove connector 300 is continuously moved upward, the chassis assembly is finally in a fully collapsed state as shown in FIGS. 7 and 8, with the first parallel-bars 230 and the second parallel-bars 240 collapsed in the groove connector 300. Conversely, when it is required to expand the collapsible wagon, the first parallel-bars 230 and the second parallel-bars 240 collapsed in the groove connector 300 are moved away from each other, and the groove connector 300 may be pressed downward until the opposing ends of the first parallel-bars 230 and the second parallel-bars 240 hinged to the groove connector 300 are stopped by the connecting wall 330, as shown in FIG. 6. As such, the first parallel-bars 230 and the second parallel-bars 240 are kept in the expanded state, and the overall structure of the chassis assembly is stable and reliable. The groove connector 300, as the single member connecting the first parallel-bars 230 to the second parallel-bars 240, not only significantly reduces the number of parts of the chassis assembly, but also facilitates the assembly operation, and can effectively share the stress on the first parallel-bars and the second parallel-bars, further avoiding deformation or fracture defects in the middle of the chassis assembly.

In some embodiments, the pair of side walls 310 and 320 of the groove connector 300 are configured as shown to taper in dimension downward from the connecting wall 330, to facilitate collapsing of the first parallel-bars 230 and the second parallel-bars 240. Likewise, according to different needs, the length of the first upper bar 231 of the first parallel-bars 230 may be less than or equal to that of the first lower bar 232. Similarly, the length of the second upper bar 241 of the second parallel-bars 240 may be less than or equal to that of the second lower bar 242, as shown in FIG. 6. In order to increase the support strength, the first upper bar 231 may configured to be thicker than the first lower bar 232, and the second parallel-bars 240 may have a similar configuration.

Preferably, the chassis assembly further comprises a connecting shaft 500 arranged between the first chassis 210 and the second chassis 220, and the connecting shaft 500 is connected to the groove connector 300 to facilitate the vertical movement of the groove connector 300. In the case that two groove connectors 300 are provided, the connecting shaft 500 is connected between the two groove connectors 300, and FIG. 6 schematically shows a mounting hole 321 for the connecting shaft 500 in the side wall 320 of the groove connector 300. When collapsing is required, the user lifts the connecting shaft 500 upward to drive the groove connector 300 and the first chassis 210 and the second chassis 220 attached thereto to move upward synchronously, while the ends of the first chassis 210 and the second chassis 220 connected to the first support 110 and the second support 120 gradually approach each other, thereby achieving collapsing of the wagon.

As shown in FIGS. 7 and 8, in some embodiments, the length of each first vertical bar 111 and the length of each second vertical bar 121 are preferably not configured to exceed that of the first parallel-bars 230 and/or the second parallel-bars 240. Thus, when in the collapsed state, the height of the wagon is substantially the sum of the length of the first parallel-bars 230/the second parallel-bars 240 and the height of the wheel, such that the overall size is greatly reduced compared to that of the existing wagon, thereby facilitating storage and transportation.

According to the collapsible wagon of the present disclosure, the wagon structure is simplified, the side support is removed, and the collapsing means is optimized, such that the collapsing or expanding operation is convenient and fast, the collapsed volume of the wagon is reduced while reducing the number of parts and the cost, and the wagon is easy to be stored. Furthermore, the collapsible wagon of the present disclosure without a side support can carry large articles, such as articles with a dimension exceeding that of the chassis assembly. In some embodiments, a carrier frame made of flexible material, such as cloth, may also be provided. The carrier frame may be arranged on the first support 110 and the second support 120 and supported by the first vertical bars 111 and the second vertical bars 121. When the collapsible wagon needs to be collapsed, the carrier frame can be removed detachably and later installed after the wagon is expanded. Alternatively, the carrier frame can transform accordingly as the chassis assembly collapses or expands.

It should be understood that the embodiment shown in the drawings only shows the alternative architectures, shapes, dimensions and arrangements of each alternative part of the collapsible wagon according to the present disclosure. However, they are merely illustrative rather than limitative, and other shapes, dimensions and arrangements may be adopted without departing from the idea and scope of the present disclosure.

The technical contents and features of the present disclosure have been disclosed above. However, it should be understood that those skilled in the art can make various changes and improvements to the above-disclosed conception under the creative concept of the present disclosure, and all these various changes and improvements fall within the protection scope of the present disclosure. The description of the above embodiments is exemplary rather than limitative, and the protection scope of the present disclosure is defined by the appended claims.

## Claims

1. A collapsible wagon, comprising:
a support assembly comprising a first support and a second support that are spaced apart in a first direction; and
a chassis assembly arranged between the first support and the second support and comprising a first chassis and a second chassis, the first chassis being hinged to the first support and the second chassis being hinged to the second support;
wherein the first chassis is configured to comprise a first parallel-bars structure vertically arranged, wherein the second chassis is configured to comprise a second parallel-bars structure vertically arranged, and wherein the first parallel-bars structure and the second parallel-bars structure are hinged to a groove connector, and are configured to respectively drive the first chassis and the second chassis to move synchronously in response to movement of the groove connector in a vertical direction.

2. The collapsible wagon according to claim 1, wherein the first chassis and the second chassis each comprises a plurality of support bars, and wherein at least one pair of parallel support bars extending in the first direction and spaced apart in the vertical direction constitutes the first parallel-bars structure or the second parallel-bars structure.

3. The collapsible wagon according to claim 1, wherein the first support comprises a pair of first vertical bars spaced apart in a second direction and a first connecting bar arranged therebetween, wherein the second support comprises a pair of second vertical bars spaced apart in the second direction and a second connecting bar arranged therebetween, the second direction being perpendicular to the first direction;
and wherein the first parallel-bars structure comprises a pair of first parallel-bars respectively hinged to the pair of first vertical bars, the second parallel-bars structure comprises a pair of second parallel-bars respectively hinged to the pair of second vertical bars, and opposing ends of each first parallel-bars and the corresponding second parallel-bars are respectively hinged to the groove connector.

4. The collapsible wagon according to claim 3, wherein each first parallel-bars comprises a first upper bar and a first lower bar that are spaced apart in the vertical direction, and wherein each second parallel-bars comprises a second upper bar and a second lower bar that are spaced apart in the vertical direction, the first parallel-bars and the second parallel-bars having same or different lengths.

5. The collapsible wagon according to claim 4, wherein the first chassis comprises a plurality of first support bars parallel to the first upper bar and/or the first lower bar, and wherein the second chassis comprises a plurality of second support bars parallel to the second upper bar and/or the second lower bar.

6. The collapsible wagon according to claim 3, wherein the length of each first vertical bar and the length of each second vertical bar do not exceed that of the first parallel-bars and/or the second parallel-bars.

7. The collapsible wagon according to claim 4, wherein the groove connector is configured to comprise a pair of side walls extending in the vertical direction and spaced apart, and a connecting wall connecting the pair of side walls, wherein the first parallel-bars and the second parallel-bars are respectively hinged between the pair of side walls, and wherein the connecting wall serves as a stopper for limiting vertical movement of the first parallel-bars and the second parallel-bars.

8. The collapsible wagon according to claim 7, wherein the connecting wall is a top wall of the groove connector, and wherein the side walls are configured to taper in dimension downward from the connecting wall.

9. The collapsible wagon according to claim 8, wherein the length of the first upper bar is less than or equal to that of the first lower bar, and wherein the length of the second upper bar is less than or equal to that of the second lower bar.

10. The collapsible wagon according to claim 1, wherein the chassis assembly further comprises a connecting shaft arranged between the first chassis and the second chassis, and wherein the connecting shaft is connected to the groove connector to facilitate vertical movement of the groove connector.
